# EUROPÄISCHE PATENTSCHRIFT

(11) **EP 0 605 070 B1**
(45) Veröffentlichungstag und Bekanntmachung des Hinweises auf die Patenterteilung: **29.09.1999**
(21) Anmeldenummer: 93250344.4
(22) Anmeldetag: 13.12.1993
(51) Int. Cl.: G07F 7/10

(54) **Verfahren zum Transferieren von Buchgeldbeträgen auf und von Chipkarten**
Method for cash sum transfer into and from smart cards
Méthode de transfert de sommes de monnaie vers ou à partir de cartes à puce

(30) Priorität: 23.12.1992 DE 4243851
(43) Veröffentlichungstag der Anmeldung: 06.07.1994
(73) Patentinhaber: DEUTSCHE BUNDESPOST TELEKOM, 53175 Bonn (DE); International Business Machines Corporation, Armonk, N.Y. 10504 (US); ORGA DATENTECHNIK GmbH, 33102 Paderborn (DE); GAD GESELLSCHAFT FUR AUTOMATISCHE DATENVERARBEITUNG EG, D-4400 Münster (DE)
(72) Erfinder: Endler, Reinhard, D-90542 Eckental (DE); Westphal, Reinhard, D-90574 Rosstal (DE); Hartleif, Siegfried, D-64823 Gross-Umstadt (DE); Niehaus, Herbert, D-48165 Münster (DE); Schäfer, Peter, GAD: Gesellschaft für, D-4400 Münster (DE); Mergemeier, Detlev, GAD: Gesellschaft für, D-4400 Münster (DE); Hovemeyer, Dieter, Orga Datenverarbeitung EG, D-33102 Paderborn (DE)
(74) Vertreter: Strehse, Rainer

(56) Entgegenhaltungen:
- EP-A- 0 157 416
- EP-A- 0 172 670
- WO-A-90/15382
- US-A- 4 007 355
- US-A- 4 839 504
- US-A- 4 859 837

## Beschreibung

Die Erfindung betrifft ein Verfahren zum Transferieren von Buchgeldbeträgen auf und von gesicherten Chipkarten, die einen Identifizierungscode enthalten, der in Verbindung mit einem autorisierten Schlüssel in einem Autorisierungssystem aktiviert wird.

Einfache spezielle Börsenlösungen auf Chipkarten sind verschiedentlich im Einsatz. Auf internationaler Ebene werden zur Zeit sowohl debitorische als auch kreditorische Börsen spezifiziert (ETSI D/EN/TE 090114, Terminal Equipment (TE); Requirements for IC cards and terminals for telecommunication use, Part 4 - Payment methods, Version: 4, Date: 7 February 1992 und CEN/TC224/WG10; Intersector Electronic purse, DRAFT: prEN xxxxx-1, Date: 21. 02. 92)

Mit der kreditorischen Börsenfunktion wird dem Dienstenutzer ein Kreditrahmen eingeräumt, den er für unterschiedliche, meist höherwertige Bezahlvorgänge nutzen kann.

Mit der debitorischen Börsenfunktion verfügt der Dienstenutzer über ein "elektronisches Portemonnaie", mit dem er zumeist niedrigpreisige Bezahlvorgänge tätigen kann, wie z. B. telefonieren, Fahrscheine kaufen, Parkgebühren bezahlen etc. Die Abwicklung kann über eine oder mehrere debitorische Börsen für unterschiedliche Diensteanbieter erfolgen. Mit der debitorischen Börse hat der Dienstenutzer den Vorteil
- der schnellen Abwicklung von Zahlungsvorgängen,
- der Anonymität der Zahlungsvorgänge und
- des unmittelbaren Uberblickes über seine Ausgaben.

Eine debitorische Börse mit oben beschriebenen Vorteilen weist dagegen nicht den Sicherheitsstandard einer kreditorischen Börsenfunktion auf. So ist z. B. ein PIN-Handling oder eine Online-Authentifizierung an Billigterminals, wie z. B. an einem Fahrkartenautomaten im Bus, entweder sehr zeitaufwendig oder gar nicht möglich. Eine debitorische Börse darf also im Interesse des Benutzers keine größeren Buchgeldbeträge beinhalten und muß dementsprechend oft neu aufgeladen werden.
Aus US-A-4.859.837 ist ein "Portable Data Carrier" mit mehreren Speicherplätzen bekannt. Diese Speicherplätze werden als Bank Accounts bzw. Credit Card Accounts (kreditorische Börse) und als Money-Store (debitorische Börse) bezeichnet. Dabei ist der Zugriff auf den mit Credit Card Account bezeichneten Speicherbereich PIN-gesichert. Der Zugriff auf den Money-Store erfolgt offensichtlich ungeschützt. Der Money-Store kann aus den mit Bank Accounts bzw. Credit Card Accounts bezeichneten Speicherbereichen geladen werden. Wie dieser Vorgang ablaufen soll, wurde nicht angegeben. Es wird lediglich ausgeführt, daß beim karteninternen Umladen die umzuladende Summe, die Kontonummer der Ausgabestelle und das Ausgabedatum transferiert werden. Beim Umladevorgang handelt es sich demzufolge um einen rein kartenintern, im Wesentlichen ungesicherten Umbuchungsvorgang. Ein derartiger ungesicherter Umbuchungsvorgang bietet jedoch Angriffsmöglichkeiten für Manipulationen, zumal hier die Umbuchung von mehreren Bank Accounts und Credit Card Accounts zum Money-Store möglich sein soll.

In WO-A-90 15382 wird ebenfalls von zwei Speicherbereichen ausgegangen. Der erste geschützte Bereich bietet dem Nutzer die Speicherung einer unbegrenzten Menge von Geldmitteln (kreditorische Börse). Der zweite ungeschützte Bereich entspricht einem Speicherbereich für eine debitorische Börse. Bei der Überweisung von Buchgeldbeträgen vom geschützten ersten Speicherbereich in den ungeschützten zweiten Speicherbereich muß der Nutzer nur für den Zugriff auf den geschützten ersten Speicherbereich ein Identifikationsmerkmal angeben. Der Umbuchungsvorgang läuft wie bei der Lösung nach US-A-4.859.837 ungesichert ab.

Der Erfindung liegt die Aufgabe zugrunde, ein praxisorientiertes Verfahren für das Umbuchen von Buchgeldbeträgen von einem kreditorischen Börsenbereich einer Chipkarte in den debitorischen Börsenbereich der Chipkarte anzugeben. Alle Umbuchungsvorgänge, insbesondere auch kartenintern, sollen anhand von gesicherten Belegen nachvollziehbar sein und ein Höchstmaß an Sicherheit gegenüber manipulatorischen Angriffen bieten. Das Verfahren soll einen hohen Sicherheitsstandard für die Verrechnungsprozesse zwischen den Diensteanbietern, denen die einzelnen Speicherbereiche der Chipkarte als Börsen zugeordnet sind, garantieren.

Das Verfahren basiert auf einer Chipkarte mit überschreibbaren Speicherplätzen. Die Chipkarte muß mindestens einen Speicherplatz für kreditorische Börsenfunktionen und mindestens einen Speicherplatz für debitorische Börsenfunktionen enthalten. Die dem erfindungsgemäßen Verfahren zugrunde liegende Chipkarte bietet die Option Buchgeldbeträge aus der kreditorischen Börse, einmalig oder mehrfach hintereinander, in die debitorische Börse zu transferieren.

Das Verfahren ist so ausgebildet, daß der Transfervorgang sowohl über ein Autorisierungssystem als auch kartenintern möglich ist. Darüber hinaus ist die debitorische Börse so offen angelegt, daß sie jederzeit auch direkt aus einem Autorisierungssystem geladen werden kann, wie z. B. aus einem Geldautomaten, einem Bankenterminal oder einem Kartentelefon.

Erfindungsgemäß wird beim Transfer eines Geldbetrages über ein Autorisierungssystem zunächst der umzuladende Buchgeldbetrag aus dem kreditorischen Börsenfeld in das Autorisierungssystem geladen. Die Chipkarte gibt dazu über ihr Applikationsprogramm gleichzeitig eine kryptographisch gesicherte Quittung an das Autorisierungssystem ab. Anschließend wird der gleiche Betrag vom Autorisierungssystem in das debitorische Börsenfeld der Chipkarte geladen. Dieser Ladevorgang wird ebenfalls kryptographisch abgesichert quittiert. Das Autorisierungssystem erzeugt mit beiden Quittungen einen Buchungsdatensatz, der vom Diensteanbieter der debitorischen Börse beim Diensteanbieter der kreditorischen Börse eingereicht wird. Der Diensteanbieter der kreditorischen Börse authentifiziert die Quittungen des Buchungsdatensatzes. Der umgebuchte Betrag wird dann dem Betreiber der debitorischen Börse gutgeschrieben. Das Konto des Dienstenutzers wird dementsprechend belastet.

Beim karteninternen Transferieren eines Buchgeldbetrages wird der Transfer vom Autorisierungssystem in Gang gesetzt und läuft dann kartenintern über das Applikationsprogramm der Chipkarte ab. Die Chipkarte erzeugt über ihr Applikationsprogramm einen kryptographisch gesicherten Datensatz, der vom Diensteanbieter der debitorischen Börse beim Diensteanbieter der kreditorischen Börse zur Verrechnung eingereicht wird. Der transferierte Betrag wird vom Diensteanbieter der kreditorischen Börse authentifiziert und dem Diensteanbieter der debitorischen Börse gutgeschrieben. Das Konto des Dienstenutzers wird entsprechend belastet.

Anhand eines Beispiels
- für den Transfer eines Buchgeldbetrages über ein Autorisierungssystem und
- für das karteninterne Transferieren eines Buchgeldbetrages in Verbindung mit einem Autorisierungssystem wird die erfindungsgemäße Lösung näher erläutert.

Beim Transferieren eines Buchgeldbetrages über ein Autorisierungssystem wird nach dem Eingeben der Chipkarte in ein Endgerät, wie beispielsweise ein Kartentelefon, dem Dienstenutzer über ein Terminal der aktuelle Stand seiner debitorischen und kreditorischen Börse angezeigt. Parallel dazu findet sowohl eine Authentifikation der Chipkarte gegenüber dem Autorisierungssystem, als auch eine Authentifikation des Autorisierungssystems gegenüber der Chipkarte durch geeignete kryptographische Verfahren statt.

Wenn der Dienstenutzer sich zum Auffüllen seiner debitorischen Börse entschließt, wird durch das Auslösen eines dementsprechenden Befehls durch den Dienstenutzer der Umbuchungsvorgang ausgelöst. Dabei werden zunächst weitere Daten der debitorischen Börse der Chipkarte über das Endgerät an das Autorisierungssystem übertragen.

Anhand des Programms des Autorisierungssystem wird überprüft, ob das Verfallsdatum der debitorischen Börse abgelaufen ist, ob die Seriennummer in einer Sperrliste steht und ob mit dem Aufladevorgang das Limit des Geldbetrages für die debitorische Börse überschritten wird. Bei erfolgreicher Prüfung über das Programm des Autorisierungssystems erfolgt ein Auslesen weiterer Daten der kreditorischen Börse der Chipkarte.

Über das Programm des Autorisierungssystems wird ebenfalls geprüft, ob das Verfallsdatum der kreditorischen Börse abgelaufen ist, ob die Seriennummer in einer Sperrliste steht und ob der Kreditrahmen bei Abbuchung der gewünschten Summe gewahrt bleibt.
Anschließend wird der Dienstenutzer durch das Programm des Autorisierungssystems über das Endgerät zur Eingabe seiner persönlichen Geheimzahl PIN aufgefordert. Durch Eingabe der PIN und bei erfolgreicher Überprüfung durch die Chipkarte erfolgt über den kryptographisch gesicherten Abbuchungsbefehl, der vom Autorisierungssystem über das Endgerät zur Chipkarte übertragen wird, die Abbuchung des gewünschten Buchgeldbetrages aus der kreditorischen Börse.

Als Quittung über die Abbuchung des Buchgeldbetrages von der kreditorischen Börse wird mittels des Applikationsprogrammes der Chipkarte über das Endgerät ein kryptographisch gesicherter Buchungsdatensatz erstellt, der vom Dienstebetreiber der debitorischen Börse zur Verrechnung beim Diensteanbieter der kreditorischen Börse eingereicht wird. Gleichzeitig wird ein Message-Authentifikations-Code MAC übertragen. Der MAC wird gebildet, indem die Klartextdaten des Buchungsdatensatzes mit einem in der Chipkarte vorhandenen Schlüssel des Dienstebetreibers der kreditorischen Börse verschlüsselt werden. Mit dem MAC überprüft der Dienstebetreiber der kreditorischen Börse die Echtheit des Buchungsdatensatzes, indem er den MAC entschlüsselt und die Daten mit den Klartexten im Buchungsdatensatz vergleicht.

Nach Prüfung des Buchungsdatensatzes wird der aus der kreditorischen Börse abgebuchte Buchgeldbetrag (zuzüglich MAC) ebenfalls kryptographisch gesichert, vom Autorisierungssystem über das Endgerät in die debitorische Börse geladen.

Die Quittung über den in die debitorische Börse der Chipkarte geladenen Buchgeldbetrag zuzüglich MAC erfolgt wiederum in Form einer MAC-gesicherten Bestätigung, genannt MAC'. Sie wird kryptographisch gesichert über das Endgerät zum Autorisierungssystem übertragen.

Mit dem MAC' überprüft der Dienstebetreiber der kreditorischen Börse, ob dem Dienstenutzer auch tatsächlich die Dienstleistung, nämlich das Laden des aus der kreditorischen Börse entnommenen Buchgeldbetrages in die debitorische Börse, erbracht wurde.

Für das karteninterne Transferieren eines Buchgeldbetrages in Verbindung mit einem Autorisierungssystem ist der Verfahrensablauf, einschließlich der Eingabe der persönlichen Geheimzahl PIN, identisch mit dem Verfahrensablauf im vorgenannten Beispiel. Durch die Eingabe der PIN und bei erfolgreicher Überprüfung durch die Chipkarte erfolgt über den kryptografisch gesicherten Umbuchungsbefehl, der vom Autorisierungssystem über das Endgerät zur Chipkarte übertragen wird, über das Applikationsprogramm der Chipkarte die Umbuchung des gewünschten Buchgeldbetrages aus der kreditorischen in die debitorische Börse. Die Quittung über den von der kreditorischen Börse über das Applikationsprogramm der Chipkarte in die debitorische Börse umgebuchten Buchgeldbetrag erfolgt ebenfalls über eine MAC-gesicherte und kryptografisch verschlüsselte Bestätigung, die über das Endgerät zum Autorisierungssystem übertragen wird. Zur Validierung des Umbuchungsvorganges wird der MAC mit dem Schlüssel des Dienstebetreibers der kreditorischen Börse gebildet.

## Patentansprüche

1. Verfahren zum Transferieren von Buchgeldbeträgen auf und von Chipkarten mit mindestens zwei überschreibbaren Speicherplätzen, unter Verwendung von Diensteanbieter-Endgeräten, die mit einem Autorisierungssystem verbindbar sind, bei dem die überschreibbaren Speicherplätze der Chipkarte in einen kreditorischen und mindestens einen debitorischen Speicherplatz aufgeteilt werden, und über ein Applikationsprogramm der Chipkarte in Verbindung mit einem Programm des Autorisierungssystems ein beliebig oft wiederholbares Umbuchen von Buchgeldbeträgen aus dem Speicherbereich für kreditorische Börsenfunktion in den Speicherbereich für debitorische Börsenfunktion möglich ist, daß nach dem Eingeben der Chipkarte in ein Endgerät eines Dienstebetreibers dem Dienstenutzer der aktuelle Stand der debitorischen und kreditorischen Börse angezeigt wird,
**dadurch gekennzeichnet,**
- daß parallel zur Anzeige der Beträge sowohl eine Authentifikation der Chipkarte gegenüber dem sich außerhalb der Chipkarte befindlichen Autorisierungssystem, als auch eine Authentifikation des Autorisierungssystems gegenüber der Chipkarte durch geeignete kryptographische Verfahren stattfindet,
- daß nach Auslösen des Umbuchungsvorganges durch den Dienstenutzer zum Auffüllen der debitorischen Börse zunächst weitere Daten der debitorischen Börse der Chipkarte an das mit dem Endgerät ansteuerbare Autorisierungssystem übertragen werden,
- daß anhand des Programms des Autorisierungssystems überprüft wird, ob das Verfallsdatum der debitorischen Börse abgelaufen ist, ob die Seriennummer in einer Sperrliste steht und ob mit dem Aufladevorgang das Limit des Buchgeldbetrages für die debitorische Börse überschritten wird,
- daß bei erfolgreicher Prüfung über das Programm des Autorisierungssystems ein Auslesen weiterer Daten der kreditorischen Börse der Chipkarte erfolgt,
- daß über das Programm des Autorisierungssystems geprüft wird, ob das Verfallsdatum der kreditorischen Börse abgelaufen ist, ob die Seriennummer in einer Sperrliste steht und ob der Kreditrahmen bei Abbuchung der gewünschten Summe gewahrt bleibt,
- daß der Dienstenutzer durch das Programm des Autorisierungssystems über das Endgerät zur Eingabe seiner persönlichen Geheimzahl PIN aufgefordert wird,
daß nach Eingabe der PIN und bei erfolgreicher Überprüfung durch die Chipkarte
a)bei Abbuchung des gewünschten Buchgeldbetrages aus der kreditorischen Börse vom Autorisierungssystem zum Endgerät ein kryptographisch gesicherter Abbuchungsbefehl übertragen wird,
- daß als Quittung über die erfolgte Abbuchung des Buchgeldbetrages von der kreditorischen Börse mittels des Applikationsprogrammes der Chipkarte über das Endgerät ein Buchungsdatensatz und ein Message-Authentifikations- Code MAC erzeugt und zum Autorisierungssystem übertragen werden,
- daß nach Prüfung des Buchungsdatensatzes in Verbindung mit dem MAC der aus der kreditorischen Börse abgebuchte Buchgeldbetrag, ebenfalls kryptographisch gesichert, vom Autorisierungssystem über das Endgerät in die debitorische Börse geladen wird,
- daß als Quittung über den in die debitorische Börse der Chipkarte geladenen Buchgeldbetrag zuzüglich MAC wiederum eine MAC-gesicherte Bestätigung, genannt MAC', kryptographisch gesichert über das Endgerät zum Autorisierungssystem übertragen wird, und daß MAC und MAC' mit Schlüsseln des Dienstebetreibers der kreditorischen Börse gebildet werden, so daß dieser eine Validierung des Umbuchungsvorganges vornehmen kann, und daß
b)bei Umbuchung des gewünschten Buchgeldbetrages aus der kreditorischen in die debitorische Börse vom Autorisierungssystem zum Endgerät ein kryptografisch gesicherter Umbuchungsbefehl übertragen wird,
- daß als Quittung über den von der kreditorischen Börse in die debitorische Börse umgebuchten Buchgeldbetrag mittels des Applikationsprogrammes der Chipkarte wiederum eine MAC-gesicherte Bestätigung kryptographisch abgesichert über das Endgerät zum Autorisierungssystem übertragen wird, und
- daß der MAC mit dem Schlüssel des Dienstebetreibers der kreditorischen Börse gebildet wird, so daß dieser eine Validierung des Umbuchungsvorganges vornehmen kann.

## Claims

1. Method for transferring deposit money amounts to and from chip cards, with at least two overwritable memory locations, making use service provider terminal devices that can be connected to an authorization system, in which the overwritable memory locations of the chip card can be divided into a credit memory location and at least one debit memory location, and in which, by means of an application program of the chip card, in conjunction with a program of the authorization system, deposit money amounts can be transferred any number of times from the memory location for the credit purse function to the memory location for the debit purse function, under which method, after the chip card is entered into a terminal device of a service provider, the current status of the debit and credit purse is displayed to the service user, **characterized in that**
- parallel to the display of the amounts, the chip card is authenticated from the standpoint of the authorization system located outside the chip card and the authorization system is authenticated from the standpoint of the chip card, by means of appropriate cryptographic methods,
- after the transfer process to fill up the debit purse is initiated by the service user, further data of the debit purse of the chip card is first of all transmitted to the authorization system that can be controlled from the terminal device,
- the program of the authorization system checks whether the expiration date has expired, whether the serial number is contained in a black list and whether the loading process causes the limit of the deposit money amount for the debit purse to be exceeded,
- if the check performed by the program of the authorization system is successfoul, further data of the credit purse of the chip card is read out,
- the program of the authorization system checks whether the expiration date of the credit purse is expired, whether the serial number is contained in a black list and whether the debiting of the desired amount does not cause the credit line to be exceeded,
- the service user is prompted by the program of the authorization system to enter his personal identification number (PIN) via the terminal device,
- after entry of the PIN and after successful verification by the chip card, the following occurs,
a) when the desired deposit money amount is debited from the credit purse, an encrypted debit command is transmitted from the authorization system to the terminal device,
- as an acknowledgement for the debit of the deposit money amount from the credit purse, a transaction data record and a message authentication code (MAC) are generated by means of the application program of the chip card and transmitted to the authorization system via the terminal device,
- after verification of the transaction data record in conjunction with the MAC, the deposit money amount debited from the credit purse is transferred, again encrypted, from the authorization system to the debit purse via the terminal device,
- as an acknowledgement for the deposit money amount plus MAC transferred to the debit purse of the chip card, another MAC-secured confirmation, named MAC', is transmitted, again encrypted, to the authorization system via the terminal device, and MAC and MAC' are formed with cipher keys of the service operator of the credit purse, so that the latter can perform a validation of the reclassification process,
b) when the desired deposit money amount is reclassified from the credit purse to the debit purse, a cryptographically secured reclassification command is transmitted from the authorization system to the terminal device;
- as an acknowledgement for the deposit money amount reclassified from the credit purse to the debit purse by the application program of the chip card, a MAC-secured confirmation is transmitted, cryptographically secured, to the authorization system via the terminal device,
- the MAC is formed with the cipher key of the service operator of the credit purse, so that the latter can perform a validation of the reclassification process.

## Revendications

1. Procédure de transfert de crédits sur et à partir de cartes à puce avec au moins deux positions de mémoires reprogrammables, avec utilisation de terminaux de fournisseurs de services reliables à un système d'autorisation, les positions de mémoires reprogrammables étant réparties entre une position de mémoire créditrice et au moins une position de mémoire débitrice, un programme applicatif de la carte à puce en combinaison avec un programme du système d'autorisation permettant une répétition à l'infini de transferts de crédits de la position de mémoire pour fonction de porte-monnaie créditeur vers la position de mémoire pour fonction de porte-monnaie débiteur, de sorte qu'après introduction de la carte à puce dans un équipement terminal d'un opérateur de services l'utilisateur du service se voie indiquer la situation actuelle du porte-monnaie débiteur et du porte-monnaie créditeur,
**caractérisée en ce que**
- parallèlement à l'indication des montants, il y a aussi bien authentification de la carte à puce envers le système d'autorisation se trouvant en dehors de la carte à puce qu'authentification du système d'autorisation envers la carte à puce par des procédés cryptographiques appropriés,
- pour remplir le porte-monnaie débiteur après déclenchement de l'opération de transfert par l'utilisateur du service, d'autres données du porte-monnaie débiteur de la carte à puce sont d'abord transmises au système d'autorisation pouvant être atteint par le terminal,
- à partir du programme du système d'autorisation, il est vérifié si la date d'échéance du porte-monnaie débiteur n'est pas dépassée, si le numéro de série n'est pas frappé d'opposition ou si, après remplissage, la limite de crédit du porte-monnaie débiteur n'est pas dépassée,
- après cette vérification, d'autres données du porte-monnaie créditeur de la carte à puce sont lues à l'aide du programme du système d'autorisation,
- il est vérifié à l'aide du programme du système d'autorisation si la date d'échéance du porte-monnaie créditeur n'est pas dépassée, si le numéro de série n'est pas frappé d'opposition et si la marge de crédit n'est pas dépassée après retrait de la somme désirée,
- l'utilisateur du service est invité par le programme du système d'autorisation, par le biais du terminal, à introduire son code personnel PIN et après introduction du code PIN et vérification par la carte à puce
a) pour le retrait du montant désiré du porte-monnaie créditeur un ordre de prélèvement cryptographiquement sécurisé est transmis du système d'autorisation au terminal,
- comme justificatifs du prélèvement effectué du montant sur le porte-monnaie créditeur un jeu de données de comptabilisation et un code d'authentification de message MAC sont générés sur le terminal au moyen du programme applicatif de la carte à puce et transmis au système d'autorisation,
- après vérification du jeu de données de comptabilisation par rapprochement avec le MAC, le montant retiré du porte-monnaie créditeur, lui aussi cryptographiquement sécurisé, est chargé par le système d'autorisation, par le biais du terminal, sur le porte-monnaie débiteur,
- comme justificatif du chargement du montant dans le porte-monnaie débiteur de la carte à puce, en plus de MAC, une confirmation sécurisée par MAC, appelée MAC' est transmise - cryptographiquement sécurisée- par le biais du terminal au système d'autorisation, MAC et MAC' étant formés par des clés de l'opérateur de services du porte-monnaie créditeur, de sorte que ledit opérateur peut procéder à une validation de l'opération de transfert, et
b) pour le transfert du montant désiré du porte-monnaie créditeur sur le porte-monnaie débiteur, le système d'autorisation transmet au terminal un ordre de transfert cryptographiquement sécurisé,
- comme justificatif du montant transféré du porte-monnaie créditeur sur le porte-monnaie débiteur une confirmation sécurisée par MAC est à nouveau transmise, cryptographiquement sécurisée, par le biais du terminal au système d'autorisation à l'aide du programme applicatif de la carte à puce, et
- le MAC est formé avec la clé de l'opérateur de services du porte-monnaie créditeur, de sorte que ledit opérateur peut procéder à une validation de l'opération de transfert.
